(19) Europäisches Patentamt
European Patent Office
Office européen des brevets

(11) **EP 4 439 892 A1**

(12) **EUROPEAN PATENT APPLICATION**

(43) Date of publication:
**02.10.2024   Bulletin 2024/40**

(21) Application number: **23382306.1**

(22) Date of filing: **30.03.2023**

(51) International Patent Classification (IPC):
***H02G 13/00*** (2006.01)

(52) Cooperative Patent Classification (CPC):
**H02G 13/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Chifarelli, Armando Francisco**
**2420 Lambare (PY)**

(72) Inventor: **Chifarelli, Armando Francisco**
**2420 Lambare (PY)**

(74) Representative: **Durán-Corretjer, S.L.P.**
**Còrsega, 329**
**(Paseo de Gracia/Diagonal)**
**08037 Barcelona (ES)**

<u>Remarks:</u>
Amended claims in accordance with Rule 137(2) EPC.

(54) **LIGHTNING PROTECTION DEVICE USING ELECTRIC FIELD COMPENSATION**

(57)     Lightning protection device, said device comprising a support mast, means for connection to a structure, situated at a proximal end, and an upper main head situated at a distal end, which comprises a first pair of electrodes separated by a first dielectric, one of said first pair of electrodes being connected to earth and the other electrode being a floating electrode, such that there can be a difference in potential between the two electrodes, the electrodes of the upper main head each comprising a central projection which projects in the direction towards the other electrode of the head, wherein the electrodes of the upper main head each comprise an annular projection arranged around their respective central projection, said annular projection projecting in the direction towards the other electrode.

Fig.1

EP 4 439 892 A1

## Description

The present invention discloses a lightning protection device. More specifically, the present invention discloses a lightning protection device using electric field compensation with dual capacitor.

Lightning forms owing to the appearance of an electrical charge (with this electrical charge being negative in the majority of storms) in cumulonimbus clouds. This charge is attracted by the positive charge of the earth's surface. When this electrical charge is high, it is frequently possible that a lightning bolt or downward leader between the electrical charge of the cumulonimbus cloud and that of the ground will form. In other cases, the cumulonimbus clouds have a positive electrical charge whilst the earth's surface has a negative electrical charge, with the lightning bolt formed in this case being an upward leader.

Lightning protection devices which act as electric and/or electromagnetic field protectors are known. These lightning protectors, also called electric field protectors, electromagnetic field compensators or multiple electromagnetic field compensators are passive collector systems which at all times balance and deionize the effects of atmospheric phenomena by means of a part thereof which acts as a capacitor.

These devices for controlling the electromagnetic field comprise two electrodes separated by a dielectric, with one of these electrodes, usually the lower electrode, being connected to earth and with this having the same charge as the earth. This configuration of electrodes allows the lightning rod, by means of its electrode that is not connected to earth, usually the upper electrode, to attract the electrical charge of the electromagnetic field of the cumulonimbus clouds. As a result, there is a difference in potential between the electrodes in these devices.

This lightning protector acts as a capacitor, the main function of which is to attract atmospheric charges within its radius of coverage by diverting it constantly to earth, resulting in small leaks or diversions of current via the dielectric, allowing the electromagnetic field to be discharged via small, harmless, milliampere current leaks, avoiding the formation of the upward or downward leader (lightning bolt). Its operating principle is thus based on compensating for and establishing the electromagnetic field existing within its area of protection, thereby cancelling out the formation of the upward leader, neutralizing the lightning bolt, draining the electric fields to earth, in the form of low-intensity currents, with this current being harmless to people and equipment. The flow of charges from the atmosphere to earth allows the equipment to prevent and/or hamper the formation of the lightning bolt. One main advantage of this type of lightning rod device is that they generate a protective shield or area in their coverage area.

The electromagnetic field compensator carries out a constant drainage process under its radius of action; the time at which the greatest drainage takes place is when the field is charged and this occurs at times when dark clouds are present (moments before, during and after an electrical storm).

The main difference with traditional lightning rods is that said traditional lightning rods attract the lightning bolt so that the upward or downward leader is created between the cumulonimbus cloud and the tip of the lightning rod. Devices for controlling the electromagnetic field have the advantageous effect of neither exciting nor capturing the lightning bolt, but instead they act by attracting the charges at their upper electrode and gradually discharging these, as well as avoiding the electrical risks deriving from a lightning strike, preventing the device from being struck. In addition, no electromagnetic compatibility effects are created. These devices enable any type of structures and environments at risk of fire or explosion to be protected.

Dual head lightning protection devices are also known, where a main upper head has an earthed electrode and a floating electrode, with potential equal to that of the surrounding atmosphere, and a secondary head with a similar configuration, wherein the floating electrode of the secondary head and the earthed electrode of the main head are adjacent and are separated in the central part thereof, by an insulating material. With this configuration, the main head is supported by the secondary head, achieving a greater total charge storage capacity. This is due to the fact that both heads which perform the function of capacitor are arranged in parallel.

More specifically, the present invention discloses a lightning protection device, said device comprising a support mast, means for connection to a structure, situated at a proximal end, and an upper main head, situated at a distal end, which comprises a first pair of electrodes separated by a first dielectric, one of said first pair of electrodes being connected to earth, and the other electrode being a floating electrode, such that there can be a difference in potential between the two electrodes. The electrodes of the upper main head each comprise a central projection which projects in the direction towards the other electrode of the head. In addition, the electrodes of the upper main head each comprise an annular projection arranged around their respective central projection, said annular projection projecting in the direction towards the other electrode.

In the context of this invention, the expressions "lower", "below", "proximal", "distal" and "upper" are to be understood in the context of a user observing the device being installed in normal operation, with the longitudinal axis of the device coinciding with the vertical axis referenced to earth, that is to say the radial direction of the earth's sphere, and with the main head at the highest part.

The combination of a central projection and an annular projection around said central projection situated on each electrode of the main head, projecting towards the other electrode of the main head, causes the electric field inside the head, which acts as a capacitor, to significantly increase as compared with a configuration without said annular projection, such that the capacity or capacitance of the capacitor is increased. This configuration allows a greater attraction between the opposing charges stored in each electrode, allowing a greater amount of charge to be stored in the electrodes. The minimum distance between the electrodes is found at the edges. The dielectric material is situated between said edges, such that the central part of the heads is hollow, with only air performing the dielectric function. Said device protects against lightning by diverting charges to earth in a controlled manner and, in turn, by generating its own electric field, capable of altering and stabilizing the electric field around it, which also protects electronic elements close to the device that may be damaged by electromagnetic pulses.

Preferably, the device comprises a lower secondary head which comprises a second pair of electrodes separated by a second dielectric, one of said second pair of electrodes also being connected to earth and the other electrode being a floating electrode, such that there can be a difference in potential between the two electrodes.

A configuration with two heads, an upper head and a lower head, with each head having an earthed electrode, that is to say at earth potential, and another floating electrode, that is to say at potential of the atmosphere or air surrounding it, allows the total or equivalent charge storage capacity to be increased significantly. Each head acts as a capacitor. With the described configuration, both heads have an electrode that is referenced to earth and an electrode that is referenced to the atmosphere, and therefore they act as two capacitors in parallel. This is, therefore, equivalent to a capacitor whose capacity or capacitance is equal to the sum of both capacitors separately.

$$Ce = C1 + C2$$

The secondary head is supported on the main head, taking care of a more rapid diversion of charge to earth, such that this allows greater charge storage, and consequently the creation of a greater electric field, by said main head.

More preferably, the electrodes of the lower secondary head each comprise a central projection which projects in the direction towards the other electrode of the head.

Even more preferably, the electrodes of the secondary head each comprise an annular projection arranged around their respective central projection, said annular projection projecting in the direction towards the other electrode.

In addition to helping with the diversion of charge and allowing the generation of a greater electric field for compensation of the main head, the secondary head also provides, with its own charge storage, its own electric field which, together with the electric field generated by the main head, forms the total electric field generated by the device. Using a similar configuration in the secondary head helps the generation of the electric field of the secondary head which is combined with that of the main head.

Preferably, the central projections have a hemispherical shape.

Preferably, the annular projection of each electrode has a semitoroidal shape.

The configuration with central projections and annular projections around said central projections affords a significant improvement in the efficiency of the device, as opposed to a device which does not comprise the annular projections around its respective central projections. By means of tests for generating electromagnetic fields, both in direct current and alternating current, it has been possible to verify the effect that said feature contributes to the present invention. The response of a pointed lightning rod known from the prior art has been compared with another lightning protection device using electric field compensation according to the present invention and a lightning protection device using electric field compensation, with the same features as the present invention but which does not comprise the projections in the form of rings. In these tests, it has been seen how the lightning protection device according to the invention greatly improves the response of a conventional lightning rod and significantly improves the result obtained with the device which does not comprise the annular projections. These tests were conducted via the artificial generation of electromagnetic fields around each device. Subsequently, the response that each device provides with respect to said electric and magnetic fields was observed, measuring the total alteration of the electromagnetic field because of the presence of each device and seeing to what extent each device withstands the effect of an electric field in its surroundings, simulating an electrical storm, without the formation of leaders of a lightning bolt.

In a preferred embodiment, the lightning protection device comprises at least one drainage plug.

In a more preferred embodiment, the at least one drainage plug is situated on the main head.

In a preferred embodiment, the lightning protection device comprises at least one drainage plug situated on the main head and at least another drainage plug situated on the secondary head.

The presence of a drainage plug serves, inter alia, for monitoring the humidity and generation of liquid inside the heads and for being able to drain said generated liquid, for example as a result of condensation, from inside the heads. This allows improved functioning of the device, facilitating the capacity or capacitance of each capacitor or head by maintaining a dry atmosphere inside, which promotes the dielectric effect, both of the air and of the dielectric material, between the electrodes.

In a preferred embodiment, the earthed electrode of the main head is the lower electrode of said main head and the floating electrode is the upper electrode of said main head.

In a preferred embodiment, the earthed electrode of the secondary head is the lower electrode of said secondary head and the floating electrode is the upper electrode of said secondary head.

The fact that the floating electrode, which is at atmospheric or air potential, is the upper electrode makes it possible, to a certain extent, to compensate for the charge accumulated in the earthed electrode, such that the actuation of the lower electrode as lightning attractor is made more difficult, and therefore the device is protected in its most vulnerable parts or the parts more predisposed to form lightning leaders.

For a clearer understanding of the present invention, drawings illustrating an exemplary embodiment of the present invention are attached by way of explanatory but non-limiting example.

Figure 1 shows a view in section of a lightning protection device compensating for electromagnetic field according to the present invention.

Figure 2 shows a detail view in section of the main head.

Figure 3 shows a detail view in section of the projections of the lower electrode of the main head.

Figure 4 shows a detail view in section of the secondary head.

Figure 5 shows a graph comparing the performance of the present invention with the prior art.

Figure 6 shows a perspective view of the lightning protection device according to the present invention.

Figure 7 shows another perspective view of the lightning protection device according to the present invention.

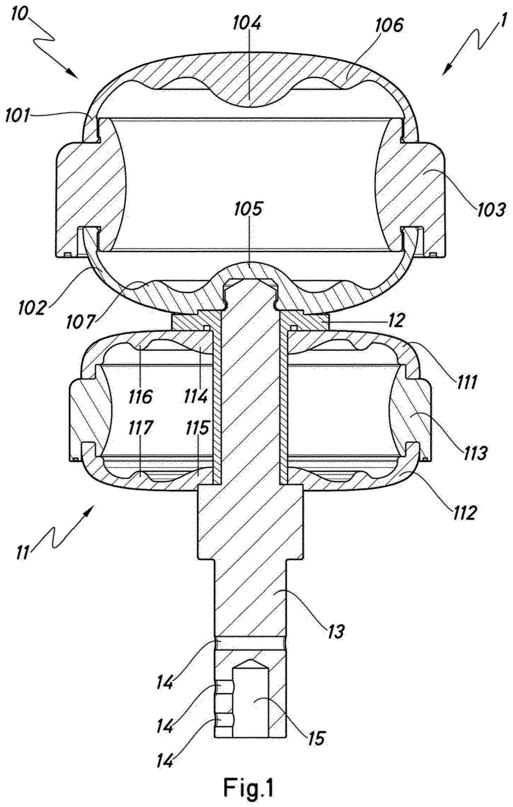

Figure 1 shows, in a sectional view, a lightning protection device 1 using electric field compensation with dual capacitor. It can be seen that the device 1 comprises a main head 10 and a secondary head 11, both secured to a mast 13 with means 14 and 15 for connection to a structure and separated by an insulator 12. The main head 10 and the secondary head 11 act as capacitors. The main head 10 comprises an upper floating electrode 101, that is to say at the same potential as the atmosphere or air surrounding it, a lower electrode 102 connected to earth, that is to say at earth potential, and an annular dielectric material 103 which separates the upper electrode 101 and the lower electrode 102. The electrodes 101 and 102 have a general bowl shape and face one another, and therefore the edges of said electrodes 101 and 102 are the points of least distance between the electrodes. The annular shape of the dielectric material 103 allows the two electrodes 101 and 102 to be separated and insulated, precisely by the edges. Similarly, the secondary head 11 comprises an upper floating electrode 111, an annular dielectric material 113 and an earthed lower electrode 112. Despite having somewhat different measurements and a smaller distance between the electrodes 111 and 112 than there is between the electrodes 101 and 102 of the main head 10, the configuration and positioning of the elements of which the two heads 10 and 11 are composed are similar. Thanks to the view in section, it is also possible to see the internal shape of the electrodes 101, 102, 111 and 112. It can be seen that the electrodes 101 and 102 of the head 10 each comprise a central projection 104 and 105 respectively of substantially hemispherical or cap-shaped form. The projections 104 and 105 face one another such that they project towards one another. Moreover, it can be seen how the electrode 101 comprises another projection 106 with a generally semitoroidal shape which surrounds the central projection 104 and how the electrode 102 comprises another projection 107 also with a generally semitoroidal shape which surrounds the projection 105. Both projections 106 and 107 have a projection distance less than that of the projections 104 and 105 which they respectively surround. Similarly, the electrodes 111 and 112 of the head 11 respectively have a central projection 114 and 115 and another annular projection 116 and 117 with a generally semitoroidal shape which surrounds their respective central projection 114 and 115. In this case, the two central projections 116 and 117 are passed through by the mast 13 and the insulating material 12 which surrounds said mast 13, such that the insulation of the electrode 111 is achieved and such that said electrode is a floating electrode and is at the potential of the atmosphere surrounding it. In all cases, the annular projections 106, 107, 116 and 117 have a projection distance less than that of the central projections 104, 105, 114 and 115 which they respectively surround.

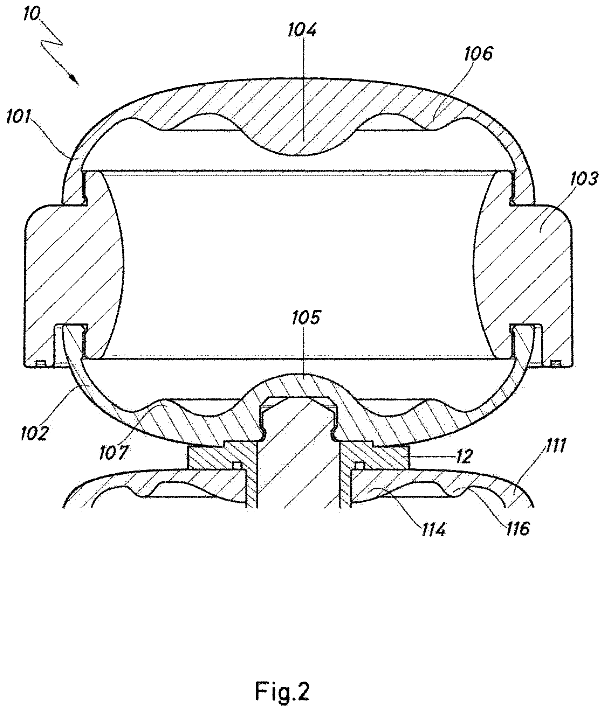

In Figure 2 the main head 10 and the elements which it comprises can be seen in greater detail. It can be seen how the dielectric material 103 separates the edges of the electrodes 101 and 102, leaving the inside of the head 10 hollow, such that the air which is inside the head is that which performs the dielectric function between the projections 104 and 106 of the electrode 101 and the projections 105 and 107 of the electrode 102. Moreover, the insulating material 12 and the electrode 111 with its projections 114 and 116 can be seen in the lower part of the figure.

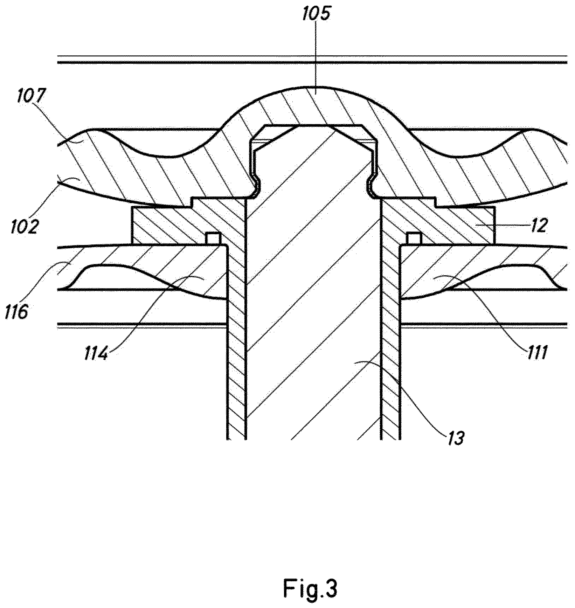

Figure 3 shows the detail of the separation between the heads 10 and 11. In this detail figure, it can clearly be seen how the lower electrode 102 of the head 10 is in contact with the mast 13, but the upper electrode 111 of the head 11 is separated both from the mast 13 and from the electrode 102, by the insulating material 12. This means that the electrode 111 is a floating electrode, it is electrically insulated from nearby elements and therefore it is at the same potential as the air surrounding it. In this figure, the projections 105 and 107 of the electrode 102 and the projections 114 and 116 of the electrode 111 can also be seen.

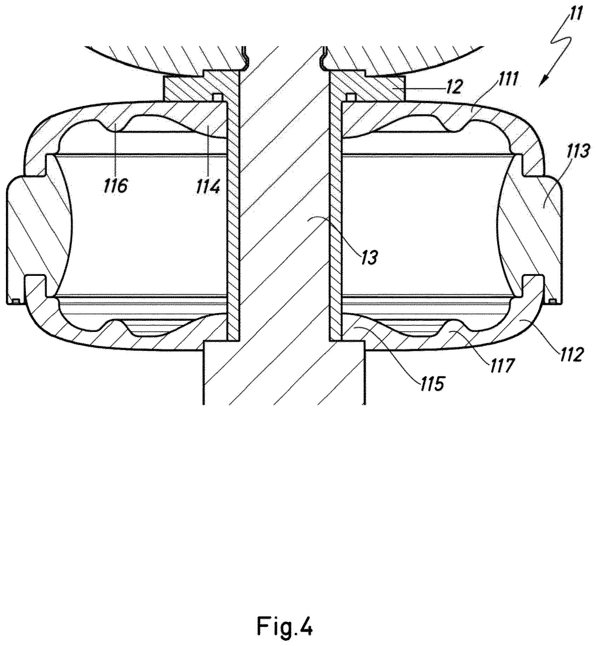

In Figure 4 the secondary head 11 and the elements which it comprises can be seen in greater detail. It can be seen how the dielectric material 113 separates the edges of the electrodes 111 and 112, leaving the inside of the head 11 hollow, such that the air which is inside the head is that which performs the dielectric function between the projections 114 and 116 of the electrode 111 and the projections 115 and 117 of the electrode 112. Moreover, it can also be seen how the insulating material 12 separates the electrode 111 from the mast 13 and from the electrode 102 and, in spite of the fact that the insulating material 12 is also interposed between the mast 13 and the electrode 112, part of said electrode 112 is in direct contact with the mast 13.

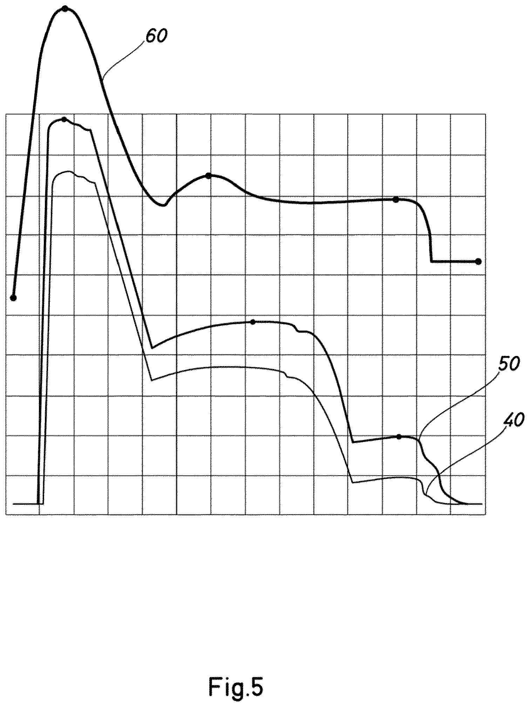

Figure 5 shows a comparative graph with three curves measuring the electromagnetic field, represented on the ordinate axis, as a function of time, represented on the abscissa axis. Each curve represents the electromagnetic field resulting at a single point under the effect of a different lightning rod device due to the same artificially generated electromagnetic field. In this way, the difference between the effect that each device causes in the electromagnetic field in its surroundings can be seen. The curve 60 represents a conventional pointed Franklin lightning rod. The curve 50 represents a lightning protection device using electric field compensation, with the same features as the present invention but without comprising the ring-shaped projections. The curve 40 represents a lightning protection device using electric field compensation according to the present invention, that is to say with the annular projections 106, 107, 116 and 117 around the main projections 104, 105, 114 and 115 on the internal surface of the heads 10 and 11. As can clearly be seen, the device according to the invention achieves greater stability of the electromagnetic field with respect to the same external simulation, which represents an electrical storm. As a result, the improvement offered by a device according to the present invention as compared to the other two devices is clear.

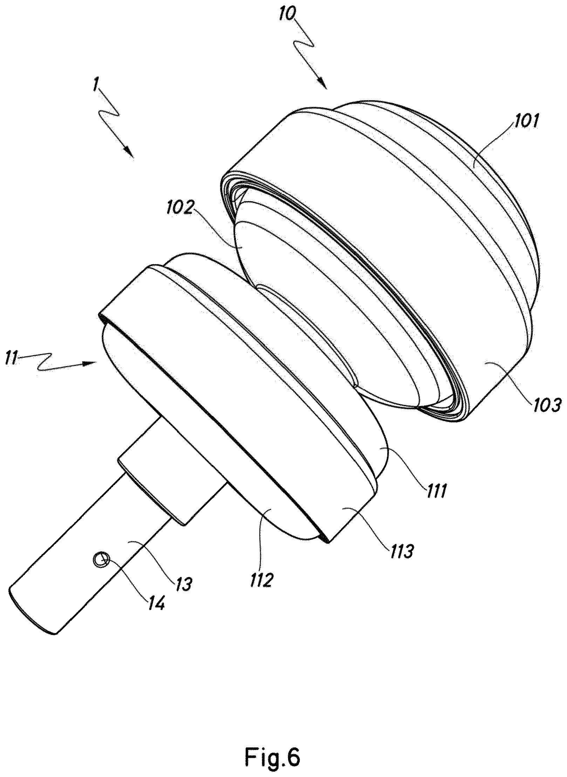

Figure 6 shows a perspective view of the device 1, such that the general external shape thereof can be appreciated. In this view too, the external elements of the device can be clearly seen. The main head 10 which comprises the electrodes 101 and 102 and the dielectric material 103 and the secondary head 11 which comprises the electrodes 111 and 112 and the dielectric material 113 can be seen. It is also possible to see the mast 13 and the connection means 14.

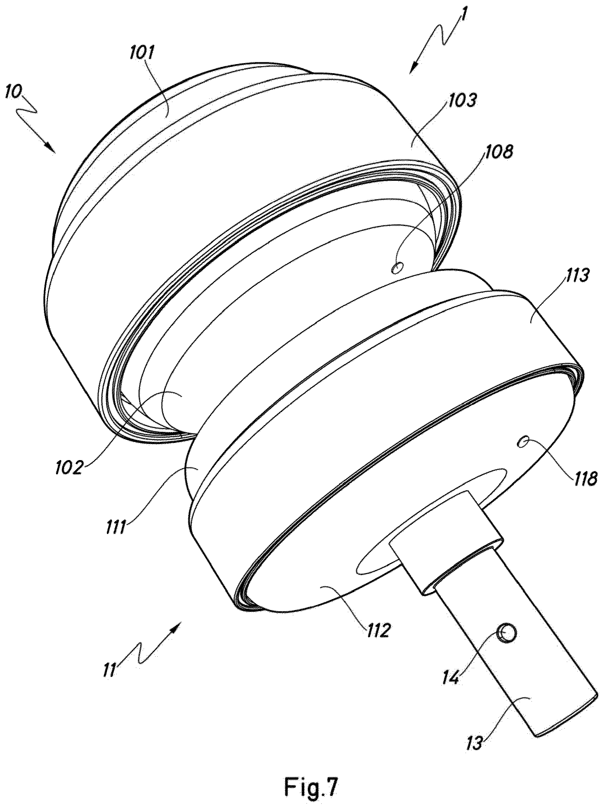

Figure 7 shows another perspective view of the device 1, in which, as well as the elements shown in Figure 6, such as the heads 10 and 11, the electrodes 101, 102, 111 and 112, the dielectric materials 103 and 113, the mast 13 and the connection means 14, a drainage plug 108 can be seen, located in a lower part of the electrode 102, another drainage plug 118 in a lower part of the electrode 112 and the connection means 15.

Although the invention has been described and illustrated with reference to a number of representative examples, it will be appreciated that this exemplary embodiment is in no way limiting on the present invention and therefore any of the variants included, directly or as equivalents, within the content of the attached claims must be considered to be included within the scope of the present invention.

**Claims**

1. Lightning protection device, said device comprising a support mast, means for connection to a structure, situated at a proximal end, and an upper main head situated at a distal end, which comprises a first pair of electrodes separated by a first dielectric, one of said first pair of electrodes being connected to earth and the other electrode being a floating electrode, such that there can be a difference in potential between the two electrodes, the electrodes of the upper main head each comprising a central projection which projects in the direction towards the other electrode of the head, **characterized in that** the electrodes of the upper main head each comprise an annular projection arranged around their respective central projection, said annular projection projecting in the direction towards the other electrode.

2. Lightning protection device according to the preceding claim, **characterized in that** the device comprises a lower secondary head which comprises a second pair of electrodes separated by a second dielectric, one of said second pair of electrodes also being connected to earth and the other electrode being a floating electrode, such that there can be a difference in potential between the two electrodes.

3. Lightning protection device according to the preceding claim, **characterized in that** the electrodes of the lower secondary head each comprise a central projection which projects in the direction towards the other electrode of the head.

4. Lightning protection device according to the preceding claim, **characterized in that** the electrodes of the secondary head each comprise an annular projection, arranged around their respective central projection, said annular projection projecting in the direction towards the other electrode.

5. Lightning protection device according to any of the preceding claims, **characterized in that** the central projections have a hemispherical shape.

**6.** Lightning protection device according to any of the preceding claims, **characterized in that** the annular projection of each electrode has a semitoroidal shape.

**7.** Lightning protection device according to any of the preceding claims, **characterized in that** it comprises at least one drainage plug.

**8.** Lightning protection device according to the preceding claim, **characterized in that** the at least one drainage plug is situated on the main head.

**9.** Lightning protection device according to any of Claims 2 to 8, **characterized in that** it comprises at least one drainage plug situated on the main head and at least another drainage plug situated on the secondary head.

**10.** Lightning protection device according to any of the preceding claims, **characterized in that** in the main head the earthed electrode is the lower electrode and the floating electrode is the upper electrode.

**11.** Lightning protection device according to any of Claims 2 to 10, **characterized in that** in the secondary head the earthed electrode is the lower electrode and the floating electrode is the upper electrode.

**Amended claims in accordance with Rule 137(2) EPC.**

**1.** Lightning protection device, said device comprising a support mast, means for connection to a structure, situated at a proximal end, and an upper main head situated at a distal end, which comprises a first pair of electrodes separated by a first dielectric, one of said first pair of electrodes being connected to earth and the other electrode being a floating electrode, such that there can be a difference in potential between the two electrodes, the electrodes of the upper main head each comprising a central projection which projects in the direction towards the other electrode of the head, **characterized in that** the electrodes of the upper main head each comprise an annular projection arranged around their respective central projection, said annular projection projecting in the direction towards the other electrode and also comprises a lower secondary head which comprises a second pair of electrodes separated by a second dielectric, one of said second pair of electrodes also being connected to earth and the other electrode being a floating electrode, such that there can be a difference in potential between the two electrodes.

**2.** Lightning protection device according to the preceding claim, **characterized in that** the electrodes of the lower secondary head each comprise a central projection which projects in the direction towards the other electrode of the head.

**3.** Lightning protection device according to the preceding claim, **characterized in that** the electrodes of the secondary head each comprise an annular projection, arranged around their respective central projection, said annular projection projecting in the direction towards the other electrode.

**4.** Lightning protection device according to any of the preceding claims, **characterized in that** the central projections have a hemispherical shape.

**5.** Lightning protection device according to any of the preceding claims, **characterized in that** the annular projection of each electrode has a semitoroidal shape.

**6.** Lightning protection device according to any of the preceding claims, **characterized in that** it comprises at least one drainage plug.

**7.** Lightning protection device according to the preceding claim, **characterized in that** the at least one drainage plug is situated on the main head.

**8.** Lightning protection device according to any of Claims 2 to 8, **characterized in that** it comprises at least one drainage plug situated on the main head and at least another drainage plug situated on the secondary head.

**9.** Lightning protection device according to any of the preceding claims, **characterized in that** in the main head the earthed electrode is the lower electrode and the floating electrode is the upper electrode.

**10.** Lightning protection device according to any of Claims 2 to 10, **characterized in that** in the secondary head the earthed electrode is the lower electrode and the floating electrode is the upper electrode.

Fig.1

Fig.2

Fig.3

Fig.4

Fig.5

Fig.6

Fig.7

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 081889 A (LIGHTNING SUPPRESSION SYS CO LTD) 16 May 2016 (2016-05-16) * paragraph [0029] – paragraph [0047] * ----- | 1-11 | INV. H02G13/00 |
| X | US 2016/285248 A1 (MALDONADO PARDO ANTONIO JAVIER [AD]) 29 September 2016 (2016-09-29) * paragraph [0028] – paragraph [0031]; figure 2 * ----- | 1-11 | |
| X | US 2011/075316 A1 (RODRIGUEZ MONTES ANGEL [ES] ET AL) 31 March 2011 (2011-03-31) * paragraph [0032] – paragraph [0043] * ----- | 1-11 | |

TECHNICAL FIELDS
SEARCHED (IPC)

H02G
H05F
H01T

The present search report has been drawn up for all claims

| Place of search | Date of completion of the search | Examiner |
|---|---|---|
| The Hague | 15 September 2023 | Vantaraki, Anastasia |

## ANNEX TO THE EUROPEAN SEARCH REPORT
## ON EUROPEAN PATENT APPLICATION NO.

EP 23 38 2306

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | | Publication date | Patent family member(s) | | Publication date |
|---|---|---|---|---|---|---|
| JP 2016081889 | A | | 16-05-2016 | JP 5839332 | B1 | 06-01-2016 |
| | | | | JP 2016081889 | A | 16-05-2016 |
| US 2016285248 | A1 | | 29-09-2016 | AR 103970 | A1 | 14-06-2017 |
| | | | | AU 2015234349 | A1 | 13-10-2016 |
| | | | | BR 112017020188 | A2 | 05-06-2018 |
| | | | | CA 2978509 | A1 | 29-09-2016 |
| | | | | CL 2017002366 | A1 | 29-06-2018 |
| | | | | CN 106028612 | A | 12-10-2016 |
| | | | | CO 2017010789 | A2 | 10-11-2017 |
| | | | | CR 20170479 | A | 13-03-2018 |
| | | | | CU 20170114 | A7 | 08-12-2017 |
| | | | | DK 3277059 | T3 | 04-11-2019 |
| | | | | DO P2017000210 | A | 15-11-2017 |
| | | | | EC SP17070224 | A | 29-03-2019 |
| | | | | EP 3277059 | A1 | 31-01-2018 |
| | | | | ES 2537275 | A1 | 05-06-2015 |
| | | | | GT 201700205 | A | 05-12-2018 |
| | | | | JP 6342869 | B2 | 13-06-2018 |
| | | | | JP 2016181497 | A | 13-10-2016 |
| | | | | KR 20180013858 | A | 07-02-2018 |
| | | | | LT 3277059 | T | 10-12-2019 |
| | | | | MA 41235 | A1 | 31-08-2018 |
| | | | | MX 362434 | B | 17-01-2019 |
| | | | | MY 182483 | A | 25-01-2021 |
| | | | | PE 20180746 | A1 | 27-04-2018 |
| | | | | PH 12017550095 | A1 | 12-02-2018 |
| | | | | PT 3277059 | T | 08-10-2019 |
| | | | | RU 2017136721 | A | 24-04-2019 |
| | | | | SG 11201707694Y | A | 30-10-2017 |
| | | | | SV 2017005532 | A | 18-05-2018 |
| | | | | US 2016285248 | A1 | 29-09-2016 |
| | | | | WO 2016151173 | A1 | 29-09-2016 |
| US 2011075316 | A1 | | 31-03-2011 | AR 078454 | A1 | 09-11-2011 |
| | | | | ES 2370717 | A1 | 22-12-2011 |
| | | | | US 2011075316 | A1 | 31-03-2011 |
| | | | | WO 2011039386 | A1 | 07-04-2011 |

EPO FORM P0459

For more details about this annex : see Official Journal of the European Patent Office, No. 12/82